(19) Europäisches Patentamt
European Patent Office
Office européen des brevets

(11) Publication number: **0 040 318**
**B1**

(12) **EUROPEAN PATENT SPECIFICATION**

(45) Date of publication of patent specification: **11.04.84**

(51) Int. Cl.$^3$: **C 01 B 15/043**

(21) Application number: **81102738.2**

(22) Date of filing: **10.04.81**

(54) **The production of alkali metal or alkaline earth metal peroxides and peroxides when so produced.**

(30) Priority: **15.05.80 GB 8016015**

(43) Date of publication of application:
**25.11.81 Bulletin 81/47**

(45) Publication of the grant of the patent:
**11.04.84 Bulletin 84/15**

(84) Designated Contracting States:
**AT BE DE FR GB IT NL**

(56) References cited:
**FR - A - 1 429 876**
**FR - A - 2 175 652**
**GB - A - 1 108 302**
**GB - A - 1 150 752**
**GB - A - 2 048 842**
**US - A - 3 185 546**
**US - A - 3 212 850**

(73) Proprietor: **Interox Chemicals Limited**
**Hanover House 14 Hanover Square**
**London W1R 0BE (GB)**

(72) Inventor: **Haughey, Douglas Peterson**
**53 Stocks Lane**
**Chester CH3 5TE (GB)**
Inventor: **Millar, Malcolm Howard**
**49 Ullet Road**
**Liverpool 17 (GB)**

(74) Representative: **ffrench-Lynch, Cecil et al,**
**Laporte Industries Ltd., Group Patent Department,**
**P.O. Box 2, Moorfield Road**
**Widnes, Cheshire WA8 0JU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 040 318 B1**

The production of alkali metal or alkaline earth metal peroxides and peroxides when so produced

This invention relates to the production of alkali metal or alkaline earth metal peroxides such as, for example, calcium peroxide.

Alkali metal or alkaline earth metal peroxides have utility as sources of oxygen in a wide range of applications amongst which are chemical processing technology, agriculture, water treatment and medicine. The usable oxygen content of such compounds is referred to as "active oxygen".

Depending on the particular application envisaged alkali metal or alkaline earth metal peroxides may be required in a variety of physical forms. They may be required in finely divided form for dispersion throughout a solid or liquid medium or throughout another particulate solid. Calcium peroxide, for example, may be required to be finely dispersed throughout a resin mix for use as a source of oxygen in the curing of polysulphide rubbers, or may be required in the form of a ball or granule for use in the soil as a long lasting source of oxygen for the encouragement of plant growth, or may be required in the form of a coating adhering to the outside of a seed for the encouragement of germination.

Alkali metal or alkaline earth metal peroxides may be prepared by reacting hydrogen peroxide and a hydroxide or oxide of the alkali metal or alkaline earth metal in an aqueous medium. The peroxide may be recovered from the aqueous medium by means of a centrifuge and may then be tray-dried. The tray-drying procedure is time consuming labour intensive, and not particularly suitable for high production rates. Due to the particular duration/temperature relationship involved tray-drying may often involve an undue loss of active oxygen. The tray dried peroxide product is highly and randomly aggregated and requires milling to produce a consistent finely divided dry product.

The milled tray-dried product may still not be directly usable for some applications. For use as a seed coating it requires separate compounding with other ingredients such as fillers and binding agents and may require a degree of wetting thereby wasting a proportion of the energy used in the tray-drying stage.

It has also been found that some finely divided alkali metal or alkaline earth metal peroxides, such as, for example calcium peroxide, are not suited to granulation or balling procedures. It is thought that this may be due to an undue uniformity of particle size where, for example, all, or nearly all, of the particles may be within a 10 micrometre range.

The present invention relates to a new or improved means of treating moist alkali metal or alkaline earth metal peroxides recovered, for example as centrifuge or filter product, from an aqueous reaction mixture. The invention provides a finely divided product suitable for granulation, and also provides a method for coating particulate substances such as seeds without a separate coating step. The invention provides a process for the preparation of an alkali metal or an alkaline earth metal peroxide by reacting hydrogen peroxide and a hydroxide or oxide of the alkali metal or alkaline earth metal in an aqueous medium and separating the peroxide from the aqueous medium in the form of a moist peroxide product characterised in that the moist peroxide product is dried by means of a direct fired pneumatic conveyor drier.

By a direct fired pneumatic conveyor drier is meant a drier in which solids to be dried are conveyed along a duct, or through a chamber or chambers, entrained in a stream of gas, usually air, which has been directly heated by combustion and which contain combustion products. The resulting dried solids are thereafter separated from the moisture-laden gas. The word "entrained" is used to denote that the solids are, at least for a time, supported against gravity by the air flow within the duct, chamber or chambers.

Pneumatic conveyor driers may, generally, be classified into three types.

(a) Simple pneumatic conveyor driers in which the solids are conveyed in one or more passes, usually upwardly through a duct.
(b) Pneumatic conveyor driers incorporating a delay chamber or chambers. The chambers are, usually, used in combination with a duct or ducts and are, usually, of the cyclone type in which the solids are conveyed in a circular or helical path about the inner circumference thereof so as to lengthen the residence time of the solids in the drier.
(b) Pneumatic conveyor driers of the ring drier type incorporating partial recycle of the air and entrained solids in a ring duct.

Any of the above types of conveyor drier may be used in the practice of this invention provided that they are directly fired. Preferably a type (b) drier is used modified, if required, to provide recycle of a proportion of the dried material.

It is an advantageous feature this invention that the formation of the alkali metal or alkaline earth metal peroxide be carried out batchwise thereby avoiding the need for continual and precise monitoring of the rates of addition of the reactants. Suitably, at least two separate batch reactions may be carried out alternately thereby enabling a substantially continuous stream of product to be produced. Alternatively, a single batch reactor may be used in combination with a holding tank to obtain a similar effect. This alternative is preferred since the control system required is simpler and the resulting delay tends to encourage more complete reaction.

In the carrying out of the formation of the alkali metal or alkaline earth metal peroxide the aqueous hydrogen peroxide is, suitably, mixed with an aqueous suspension of the alkali metal or alkaline earth metal oxide or hydroxide in suitable proportions and the resulting aqueous reaction mixture is, suitably, maintained until the reaction is complete or has proceeded to the desired extent. Preferably the aqueous hydrogen peroxide is added to an aqueous suspension of the oxide or hydroxide, agitation being maintained during the addition and while the reaction is proceeding. Normal commercial grades of reactants may be used. The concentration of the hydrogen peroxide is, preferably, from 30% to 70% by weight, particularly preferably from 35% to 65% by weight. The water used to form the reaction medium is, preferably, recycled centrate or demineralised water. Preferably, the temperature of the dispersion is maintained at below 65°C and, particularly preferably, not above 60°C. Preferably, the temperature of the dispersion is maintained at above 35°C, and, particularly preferably at, at least, 40°C. The quantity hydrogen peroxide is preferably at least 0.7 times stoichiometric quantity and, preferably, is not more than 1.5 times the stoichiometric quantity.

Additives normally employed in the manufacture of alkali metal or alkaline earth metal peroxides may be introduced in the aqueous reaction medium as required.

Preferably, the moist peroxide product produced according to the invention is obtained by subjecting the reaction mixture to centrifugation or filtration preferably to a residual moisture content of from 10% to 45% by weight.

The aqueous medium resulting from the reaction is preferably passed, without any substantial cooling, to the centrifuge which, is preferably, a centrifuge capable of handling a continuous input. One suitable type of centrifuge is a solid bowl decanter centrifuge. Preferably, the moist peroxide product has a moisture content of not more than 40% particularly preferably not more than 35% by weight and such a moisture content is readily obtained by means of a centrifuge. Centrifuge liquor may contain small quantities of residual reactants and unseparated products and is, preferably, recycled to form the aqueous reaction medium, additional water being added to it as required. Alternatively, any excess liquor, may be discharged to waste.

It is a particularly advantageous feature of the present invention that the moist peroxide product, for example the centrifuge product, may be mixed with various substances before being dried. Pneumatic conveyor driers are, generally, equipped with means for the dispersion of the moist product to be dried in the conveying gas and, with mixing means for the blending in of recycled dried product with moist solid to be dried.

It may be necessary to blend alkali metal or alkaline earth metal peroxides with particulate solid substances, for example fillers such as, for example, calcium carbonate or fertilisers such as, for example, nitrogenous materials. Alternatively, or additionally, it may be necessary to coat seed with the peroxide product or to granulate, or ball, the peroxide product.

The addition of solid substances before drying the moist peroxide product according to the invention is particularly advantageous in that (a) it avoids a separate blending step which might have to be accompanied by moistening of the already dried product and (b) it controls the moisture content of the moist peroxide product so as to produce a material particularly suited for input into a pneumatic conveyor drier.

The dried peroxide product is particularly suitable for granulation, or balling.

A proportion of already dried peroxide product may be blended back into the moist peroxide product.

According to a further feature of this invention seed to be coated with an alkali metal or alkaline earth metal peroxide is blended with the moist peroxide product and with any such other substances as may be appropriate and the blend of seed and moist peroxide product is passed through the pneumatic conveyor drier. This is a particularly simple means of achieving seed coating. Seed of rice, wheat, barley, maize or other cereal crops, of legume such as, for example, clover, alfafa, lupins, soya and ground nut, and of vegetables such as, for example, onion, carrot, celery and tomato are, suitably, coated by such means.

Preferably, the moist peroxide product, after blending with any added substance, has a moisture content of not more than 40% by weight, particularly preferably not more than 35% by weight, but sufficient to provide adequate adhesion between the moist peroxide product and the added substance where such is required as, for example, where the added substance is seed to be coated with the moist peroxide product, for example a moisture content of at least 15%.

For the purpose of calculating the moisture content of the moist peroxide product, or the final product, moisture which is inaccessible to the drying action by virtue of the inherent nature of the added substance is ignored. On this basis the internal moisture content of seed is considered, herein, to be nil.

The pneumatic conveyor drier is operated with an inlet air temperature of, preferably, at least 150°C and, preferably, not more than 550°C, particularly preferably not more than 400°C. The residence time in the pneumatic conveyor drier is preferably the minimum required to produce adequate drying, for example at least 1 second, very suitably at least 2 seconds and is, preferably, not more than 20 seconds and gives a product containing preferably less than 0.5% moisture.

Preferably the invention is applied to the production of calcium peroxide utilising, preferably, commercial grade lime (calcium hydroxide) as a reactant A suitable grade of lime is Standard Limbux (Trade Name) containing not more than about 800 ppm iron, as $Fe_2O_3$, manufactured by Imperial Chemical Industries Limited.

The invention will now be illustrated by means of the following example of the production of calcium peroxide.

Example

A calcium peroxide slurry was prepared in 10 separate batches in a stirred tank reactor operating at 60°C. In each batch a lime slurry was initially prepared in the reactor by the addition of 5.4 kg ICI Standard Limbux (Trademark) $Ca(OH)_2$ to 9.9 kg demineralised water and 5.0 kg 50% by weight $H_2O_2$ was then pumped continuously into the reactor over a period of 19 min. Following completion of each batch reaction, 80 ml aqueous sodium silicate having a density of 1.3975 g/cm$^3$ was added to the slurry. The calcium peroxide slurries so produced were bulked to give an average solids content of 28.7% and an average $CaO_2$ content of 78% on a wet cake/dry weight basis. The bulked slurry, at 50°C, was fed continuously to a Broadbent (Trademark) decanter centrifuge and gave a solid cake with a 38.8% by weight moisture content and a centrate liquor containing 0.3% by weight of solids. The weights of recovered cake and centrate were 82.8 kg and 96.8 kg respectively.

An APV (Trademark) thermoventuri flash drier was operated continuously at an inlet air temperature of 250°C and an outlet air temperature of 90°C. Direct fired heating of the air was used. Moist solid peroxide product obtained from the centrifuged was backmixed with already dried product to give an average moisture content of about 26% by weight and was dispersed into the drier air stream. The dry peroxide obtained comprised 75% $CaO_2$ and 0.12% moisture and was in the form of a fine particle size powder which gave a satisfactory performance in both granulation and seed coating.

## Claims

1. A process for the preparation of an alkali metal or an alkaline earth metal peroxide by reacting hydrogen peroxide and a hydroxide or oxide of the alkali metal or alkaline earth metal in an aqueous medium and separating the peroxide from the aqueous medium in the form of a moist peroxide product characterised in that the moist peroxide product is dried by means of a direct fired pneumatic conveyor drier.

2. A process as claimed in claim 1, wherein the moist peroxide product has a moisture content of from 10% to 45% by weight.

3. A process as claimed in claim 1 or 2, wherein the metal peroxide is calcium peroxide.

4. A process as claimed in claim 1, wherein already dry material, consisting of or including material other than recycled previously dried alkali metal or alkaline earth metal peroxide, is added to the moist peroxide product.

5. A process as claimed in claim 4, wherein the already dry material comprises one or more fillers for the alkali metal or alkaline earth metal peroxide, one or more fertilisers or seed.

6. A process as claimed in any one of claims 4 to 6, wherein the moisture content of the moist peroxide product is controlled at not more than 35% by weight by the addition of said already dry material.

7. A process as claimed in claim 6, wherein the moisture content of the moist peroxide product is controlled at from 15% to 35% by weight by the addition of said already dry material.

8. A process as claimed in any preceding claim, wherein the dried alkali metal or alkaline earth metal peroxide has a moisture content of less than 0.5% by weight.

## Revendications

1. Procédé pour la production d'un peroxyde de métal alcalin ou de métal alcalino-terreux par réaction de peroxyde d'hydrogène avec de l'hydroxyde ou de l'oxyde du métal alcalin ou du métal alcalino-terreux en milieu aqueux et séparation du peroxyde du milieu aqueux à l'état d'un produit peroxydé humide caractérisé en ce que le produit peroxydé humide est séché au moyen d'un sécheur convoyeur pneumatique chauffé directement.

2. Procédé suivant la revendication 1 caractérisé en ce que le produit peroxydé humide a une teneur en humidité de 10% à 45% en poids.

3. Procédé suivant l'une des revendication 1 ou 2 caractérisé en ce que le peroxyde de métal est du peroxyde de calcium.

4. Procédé suivant la revendication 1 caractérisé en ce qu'on ajoute au produit peroxydé humide une matière déjà sèche comprenant en tout ou en partie une substance autre que du peroxyde de métal alcalin ou de métal alcalino-terreux préalablement séché et recyclé.

5. Procédé suivant la revendication 4 caractérisé en ce que la matière déjà sèche comprend une ou plusieurs matières de charge pour le peroxyde de métal alcalin ou de métal alcalino-terreux, un ou plusieurs engrais ou des semences.

6. Procédé suivant l'une quelconque des revendications 4 ou 5 caractérisé en ce qu'on règle la teneur en humidité du produit peroxydé humide à un niveau ne dépassant pas 35% en poids par addition de ladite matière déjà sèche.

7. Procédé suivant la revendication 6 caractérisé en ce qu'on règle la teneur en humidité du produit peroxydé humide entre 15% et 35% en poids par addition de ladite matière déjà sèche.

8. Procédé suivant l'une quelconque des revendications précédentes caractérisé en ce que le peroxyde de métal alcalin ou de métal alcalino-terreux séché a une teneur en humidité inférieure à 0,5% en poids.

**Patentansprüche**

1. Ein Verfahren zur Herstellung eines Alkalimetall- oder eines Eralkalimetallperoxids durch Umsetzen von Wasserstoffperoxid und eines Hydroxids oder Oxids des Alkalimetalls oder Erdalkalimetalls in einem wäßrigen Medium und Abtrennen des Peroxids aus dem wäßrigen Medium in der Form eines feuchten Peroxidprodukts, dadurch gekennzeichnet, daß das feuchte Peroxidprodukt mittels eines direktbeheizten Rohrtrockners mit pneumatischer Förderung getrocknet wird.

2. Ein Verfahren, wie in Anspruch 1 beansprucht, wobei das feuchte Peroxidprodukt einen Feuchtigkeitsgehalt von 10 bis 45 Gewichtsprozent hat.

3. Ein Verfahren, wie in Anspruch 1 oder 2 beansprucht, wobei das Metallperoxid Calciumperoxid ist.

4. Ein Verfahren, wie in Anspruch 1 beansprucht, wobei bereits trockenes Material, bestehend aus oder umfassend ein anderes Materials als im Kreislauf geführtes, zuvor getrocknetes Alkalimetall- oder Erdalkalimetallperoxid, zu dem feuchten Peroxidprodukt zugefügt wird.

5. Ein Verfahren, wie in Anspruch 4 beansprucht, wobei das bereits trockene Material einen oder mehrere Füllstoffe für das Alkalimetall- oder Erdalkalimetallperoxid, ein oder mehrere Düngemittel oder Saaten umfaßt.

6. Ein Verfahren, wie in irgendeinem der Ansprüche 4 bis 5 beansprucht, wobei der Feuchtigkeitsgehalt des feuchten Peroxidprodukts durch die Zugabe dieses bereits trockenen Materials auf nicht mehr als 35 Gewichtsprozent eingestellt wird.

7. Ein Verfahren, wie in Anspruch 6 beansprucht, wobei der Feuchtigkeitsgehalt des feuchten Peroxidprodukts durch die Zugabe dieses bereits trockenen Materials auf 15 bis 35 Gewichtsprozent eingestellt wird.

8. Ein Verfahren, wie in irgendeinem vorstehenden Anspruch beansprucht, wobei das getrocknete Alkalimetall- oder Erdalkalimetallperoxid einen Feuchtigkeitsgehalt von weniger als 0,5 Gewichtsprozent hat.